# DEMANDE DE BREVET EUROPEEN

(11) **EP 0 914 982 A1**
(43) Date de publication de la demande: **12.05.1999**
(21) Numéro de dépôt: 98460050.2
(22) Date de dépôt: 06.11.1998
(51) Int. Cl.: B60H 1/00

(54) **Dispositif de verrouillage d'au moins une pièce fixe avec au moins une pièce cinématique**

(30) Priorité: 07.11.1997 FR 9714267
(71) Demandeur: DEMO, 72330 Ceran-Foulletourte (FR)
(72) Inventeur: Lignereux, Jean-Pierre, 72230 Guecelard (FR)
(74) Mandataire: Vidon, Patrice

(57) **Abrégé**

L'invention concerne un dispositif de verrouillage d'au moins une pièce fixe (41) avec au moins une pièce cinématique (10), ledit dispositif comprenant au moins un premier moyen (42) de coopération prévu sur ladite pièce fixe (41) et au moins un second moyen (12) de coopération prévu sur ladite pièce cinématique (10), au moins l'un desdits premier et second moyens (42 et 12) de coopération étant susceptible de se déformer de façon élastique pour s'encliqueter avec l'autre desdits premier et second moyens (42 et 12) de coopération par translation parallèle relative entre ladite pièce cinématique (10) et ladite pièce fixe (41).

## Description

Le domaine de l'invention est celui des dispositifs de verrouillage d'au moins une pièce fixe sur au moins une pièce cinématique.

L'invention s'applique à tout ensemble mécanique faisant intervenir une pièce fixe et une pièce cinématique que l'on destine à verrouiller sur la pièce fixe. L'invention s'applique notamment, mais non exclusivement à un ensemble mécanique d'un tableau de bord d'un véhicule.

De façon classique, lorsque dans un ensemble mécanique, une pièce cinématique est mise en jeu, il est nécessaire de verrouiller cette dernière à une pièce fixe. A cet effet, ce genre de dispositif met en oeuvre deux parties distinctes : une pièce "fixe" qui sert de support et éventuellement de guide, et une pièce "cinématique" qui vient se verrouiller dans la pièce fixe de telle façon qu'un mouvement de la pièce cinématique par rapport à la pièce fixe soit possible.

On connaît notamment dans l'état de la technique, un dispositif de verrouillage mettant en oeuvre un axe de rotation prévu sur la pièce cinématique et une lumière prévue sur la pièce fixe. Pour verrouiller l'axe de rotation avec la pièce fixe, il est nécessaire de positionner par translation horizontale l'axe de rotation en face de la lumière cylindrique prévue dans la pièce fixe et puis d'insérer cet axe de rotation par translation verticale dans la lumière cylindrique. La taille de la lumière est dimensionnée de telle façon que l'axe de rotation puisse tourner librement dans ladite lumière.

Cependant, cette solution connue présente de nombreux inconvénients. En effet, elle implique une mise en place complexe pour verrouiller la pièce cinématique sur la pièce fixe. L'opérateur doit en effet ajuster l'axe de rotation de façon précise sous la lumière cylindrique avant de l'insérer dans cette dernière. Une telle opération implique donc plusieurs mouvements. De plus, cette opération nécessite un espacement important entre les deux pièces. Par ailleurs, lorsque la pièce cinématique et la pièce fixe sont verrouillées, elles occupent une place importante. De telles contraintes rendent une automatisation de cette opération de verrouillage difficile.

L'invention a notamment pour objectif de pallier ces différents inconvénients de l'état de la technique.

Plus précisément, l'un des objectifs de la présente invention est de fournir un dispositif de verrouillage d'au moins une pièce fixe avec au moins une pièce cinématique permettant de réduire le nombre de mouvements pour effectuer l'opération de verrouillage de la ou des pièce(s) fixe(s) avec la ou les pièce(s) cinématique(s).

Un objectif complémentaire de l'invention est de fournir un tel dispositif de verrouillage permettant de simplifier suffisamment l'opération de verrouillage de chaque pièce fixe sur chaque pièce cinématique associée de façon à faciliter l'automatisation de cette opération.

Un objectif complémentaire de l'invention est de fournir un tel dispositif de verrouillage permettant d'optimiser les coûts de fabrication.

Un autre objectif de l'invention est de fournir un tel dispositif de verrouillage dont l'encombrement est réduit.

Un autre objectif de l'invention est de fournir un tel dispositif de verrouillage permettant de dissocier le verrouillage du guidage en rotation de la ou des pièce(s) cinématique(s) par rapport à la ou les pièce(s) fixe(s) associée(s).

Un autre objectif de l'invention est de fournir un tel dispositif de verrouillage permettant une limitation du pivotement angulaire de la ou des pièce(s) cinématique(s) par rapport à la ou les pièce(s) fixe(s) associée(s).

Ces différents objectifs, ainsi que d'autres qui apparaîtront par la suite, sont atteints selon l'invention à l'aide d'un dispositif de verrouillage d'au moins une pièce fixe avec au moins une pièce cinématique,
dans lequel ledit dispositif comprend au moins un premier moyen de coopération prévu sur ladite pièce fixe et au moins un second moyen de coopération prévu sur ladite pièce cinématique, au moins l'un desdits premier et second moyens de coopération étant susceptible de se déformer de façon élastique pour s'encliqueter avec l'autre desdits premier et second moyens de coopération par translation parallèle relative entre ladite pièce cinématique et ladite pièce fixe.

Le principe général de l'invention repose donc sur l'équipement de chaque pièce fixe et de chaque pièce cinématique associée d'un moyen de coopération permettant un verrouillage par simple translation parallèle relative entre la ou les pièce(s) cinématique(s) et la ou les pièce(s) fixe(s).

Ainsi, le nombre des mouvements à exécuter pour verrouiller une pièce fixe sur une pièce cinématique est réduit à un. En effet, une seule opération de translation parallèle relative entre la pièce fixe et la pièce cinématique associée est nécessaire. Cela permet de simplifier l'opération de verrouillage de chaque pièce fixe sur chaque pièce cinématique associée de façon à automatiser cette opération.

De façon avantageuse, lesdits moyens de coopération sont du type mâle-femelle.

Dans un mode de réalisation préférentiel de l'invention, l'un desdits premier et second moyens de coopération comprend au moins une protubérance et en ce que l'autre desdits premier et second moyens de coopération comprend au moins une lumière conçue pour accueillir ladite au moins une protubérance.

Ainsi, les moyens de coopération sont simples et peu coûteux à fabriquer en usine.

Il est à noter que la multiplication de ces protubérances ou de ces lumières peut accroître notamment la sécurité et la résistance à l'usure et/ou améliorer la coopération de chaque pièce fixe avec chaque pièce cinématique associée.

Préférentiellement, au moins une desdites protubérance et lumière comprend au moins un rayon et/ou au moins une partie chanfreinée.

Une telle caractéristique permet de favoriser l'encliquetage en évitant aux moyens de coopération de travailler exagérément, et donc de se prémunir de tout risque de détérioration ou d'usure prématurée de ces moyens de coopération.

Selon un mode de réalisation avantageux, ladite au moins une lumière présente une taille suffisante pour permettre un mouvement relatif en translation entre ladite pièce cinématique et ladite pièce fixe, lorsque ladite protubérance coopère avec ladite lumière.

De cette façon, tout risque de cassure ou d'usure prématurée de la ou des protubérance(s) est diminué lors de l'opération d'encliquetage du premier moyen de coopération dans un second moyen de coopération. En outre, cela permet une meilleure adaptabilité aux imperfections de fabrication.

De façon préférentielle, ledit second moyen de coopération comprend également au moins un axe épaulé conçu pour coopérer avec au moins un palier ouvert prévu sur ladite pièce fixe lorsque lesdits premier et second moyens de coopération sont encliquetés.

Une telle caractéristique permet de verrouiller doublement la pièce cinématique sur la pièce fixe, d'une part, par encliquetage de la protubérance dans la lumière, et d'autre part, par coopération du palier ouvert avec l'axe épaulé.

Avantageusement, ladite lumière présente une forme oblongue en arc-de-cercle, ladite pièce cinématique étant alors susceptible d'observer un mouvement de pivotement d'amplitude limitée par rapport à ladite pièce fixe, lorsque lesdits premier et second moyens de coopération sont encliquetés.

De cette manière, la forme oblongue en arc-de-cercle de la ou des lumière(s) influe d'une part sur le guidage en rotation et d'autre part sur le contrôle du débattement angulaire de la pièce cinématique par rapport à la pièce fixe associée.

Selon une variante avantageuse, ledit axe épaulé présente une hauteur suffisante pour autoriser un léger jeu entre ladite pièce fixe et ladite pièce cinématique.

Une telle caractéristique permet notamment d'éviter des contraintes mécaniques trop fortes entre les pièces associées et/ou de faciliter, lors d'une manoeuvre de démontage, le décliquetage des moyens de coopération.

Préférentiellement, ladite au moins une pièce cinématique coopère avec des moyens permettant de la déplacer par rapport à ladite au moins une pièce fixe lorsqu'elle est verrouillée à celle-ci, lesdits moyens de déplacement étant choisis dans le groupe constitué par :
- les leviers ;
- les cames ;
- les pignons.

De façon avantageuse, ladite pièce cinématique et ladite pièce fixe sont intégrées dans un sous-ensemble ou un ensemble mécanique d'un tableau de bord d'un véhicule.

Il convient toutefois de noter que l'invention ne se limite pas à cette application particulière et peut également s'intégrer par exemple dans un sous-ensemble ou ensemble mécanique d'un appareil électroménager ou d'un appareil de réglage ou de mesure.

D'autres caractéristiques et avantages de l'invention apparaîtront à la lecture de la description suivante d'un mode de réalisation préférentiel de l'invention, donné à titre de simple exemple illustratif et non limitatif, et des dessins annexés, dans lesquels :
- la figure 1 présente une vue en perspective d'une pièce cinématique selon l'invention ;
- la figure 2 présente une vue de côté de la pièce cinématique de la figure 1 ;
- la figure 3 présente une vue en coupe transversale du second moyen de coopération prévu sur la pièce cinématique montrée aux figures 1 et 2 ;
- la figure 4 présente une vue en perspective de la pièce cinématique montrée aux figures 1 à 3 verrouillée avec une pièce fixe ;
- la figure 5 présente une vue de côté de l'ensemble montré à la figure 4 ;
- la figure 6 présente une vue en coupe transversale du premier moyen de coopération prévu sur la pièce fixe et du second moyen de coopération prévu sur la pièce cinématique telle que représentée aux figures 1 à 3.

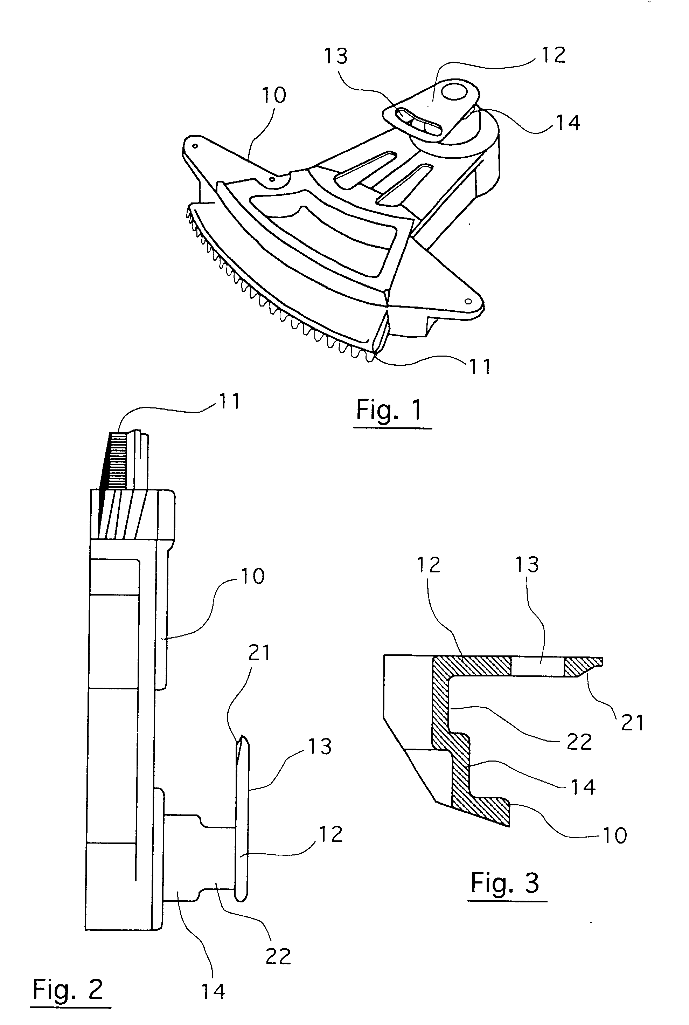

La figure 1 illustre une pièce cinématique 10 du dispositif de verrouillage. Cette pièce cinématique 10 comprend un moyen de coopération 12, qui présente de côté une forme de casquette, porté par un axe 14. Cet axe 14 constitue un axe de la pièce cinématique 10 autour duquel la pièce cinématique 10 est destinée à tourner lorsqu'elle est verrouillée à la pièce fixe. Ce moyen de coopération 12 comprend par ailleurs une lumière 13.

La pièce cinématique 10 présente sur sa périphérie une zone saillante crantée 11 en forme d'arc-de-cercle destinée à coopérer avec un organe formant pignon de manière à faire pivoter la pièce cinématique 10 autour de son axe 14. Cet organe formant pignon peut notamment être dépendant d'un bouton de réglage, par exemple d'un bouton de commande de chauffage d'un tableau de bord d'un véhicule. La pièce cinématique 10 coopère ainsi avec des moyens permettant de la déplacer par rapport à la pièce fixe lorsqu'elle est verrouillée à celle-ci, les moyens de déplacement outre les pignons pouvant être des leviers et/ou des cames.

La lumière 13 présente une forme oblongue en arc-de-cercle, conçue pour accueillir par exemple une protubérance d'un second moyen de coopération prévu sur une pièce fixe. De cette manière, les moyens de coopération utilisés sont du type mâle-femelle. Une telle forme oblongue en arc-de-cercle permet à la pièce cinématique 10 d'observer un mouvement de pivotement d'amplitude limitée par rapport à la pièce fixe associée, lorsque les moyens de coopération respectifs sont encliquetés. De cette manière, l'opération de guidage en rotation de la pièce cinématique 10 par rapport à la pièce fixe est assurée.

Selon l'invention, le moyen de coopération 12 est susceptible de se déformer de façon élastique pour permettre l'encliquetage d'un autre moyen de coopération prévu sur une pièce fixe par translation parallèle relative entre la pièce cinématique 10 et la pièce fixe. A cet effet, le moyen de coopération 12 est réalisé en matière thermoplastique, autorisant une certaine flexibilité.

On présente maintenant, en relation avec la figure 2, la pièce cinématique 10 vue de côté.

Afin de faciliter l'insertion d'une protubérance dans la lumière 13, il est prévu sur le rebord du moyen de coopération 12 une partie chanfreinée 21. Une telle partie chanfreinée 21 permet d'aider à faire glisser par un mouvement de translation la protubérance à engager dans la lumière 13 située légèrement en retrait par rapport à cette partie chanfreinée 21. De cette manière, l'effort d'engagement nécessaire est diminué pour effectuer le verrouillage. Cette partie chanfreinée 21 peut par exemple dans un autre mode de réalisation être remplacée par une partie arrondie (ou rayon). Encore dans un autre mode de réalisation, il est possible de présenter à la place une partie chanfreinée et une partie arrondie permettant d'admettre indifféremment une protubérance disposant d'une partie chanfreinée ou d'une partie arrondie. Une telle réalisation permet ainsi une meilleure adaptabilité aux différents types de protubérances.

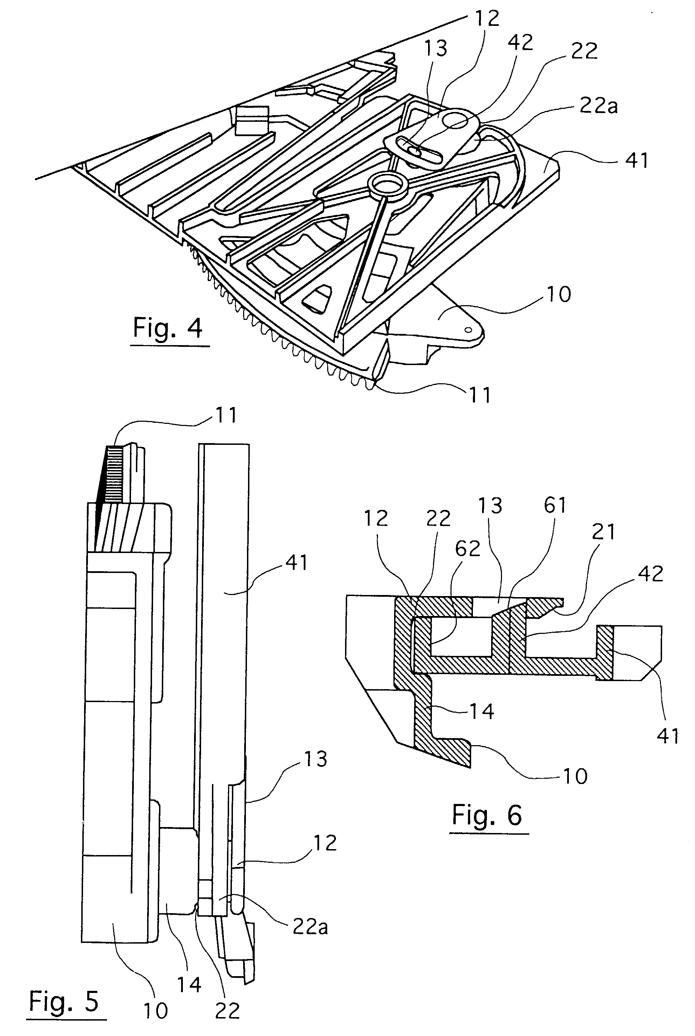

Par ailleurs, l'axe 14 est pourvu d'un épaulement 22. Cet épaulement 22 présente une hauteur conçue pour accueillir un palier ouvert 22a (voir figure 4) prévu sur la pièce fixe.

Selon une variante de réalisation, l'épaulement 22 présente une hauteur suffisante pour autoriser un léger jeu entre la pièce fixe et la pièce cinématique 10. La hauteur de l'épaulement est alors plus grande que l'épaisseur du palier ouvert 22a. Cela permet une légère translation axiale de la pièce fixe par rapport à la pièce cinématique 10. Un tel élargissement permet par exemple un décliquetage de la pièce cinématique 10 de la pièce fixe pour faciliter notamment un démontage, ou de réduire les contraintes mécaniques entre ces deux pièces à cet endroit.

De cette manière, la pièce cinématique 10 peut être doublement verrouillée à la pièce fixe, par coopération de la protubérance avec la lumière 13 et par coopération du palier ouvert 22a sur l'épaulement 22. La lumière 13 assure par ailleurs le guidage de la pièce cinématique par rapport à la pièce fixe.

Le schéma de la figure 3 illustre une vue détaillée en coupe transversale du moyen de coopération de la pièce cinématique 10.

Afin de permettre un mouvement relatif de translation entre la pièce cinématique 10 et la pièce fixe, la lumière 13 présente une largeur plus importante que celle de la protubérance qu'elle est destinée à recevoir.

Selon l'invention, l'opération de verrouillage de la pièce fixe sur la pièce cinématique 10 ne nécessite qu'une translation de la pièce fixe en direction de l'épaulement 22 de la pièce cinématique 10. L'espace nécessaire à cette opération n'est pas supérieur à l'épaisseur entre l'axe 14 et le moyen de coopération 12. Une automatisation de cette opération peut donc être facilement envisagée.

Une telle opération de verrouillage est facilitée par la partie chanfreinée 21, qui guide la protubérance à insérer dans la lumière 13.

Le schéma de la figure 4 illustre plus précisément le verrouillage de la pièce fixe 41 sur la pièce cinématique 10.

Lors de l'opération de verrouillage, le palier ouvert 22a de la pièce fixe 41 en direction de l'épaulement 22 de la pièce cinématique 10. Ce palier ouvert 22a vient recevoir l'épaulement 22. Dans ce même mouvement, la protubérance 42 vient glisser sous le moyen de coopération 12 et s'engager dans la lumière 13. Au cours de cette dernière opération, le moyen de coopération 12 se déforme élastiquement vers le haut pour laisser passer la protubérance 42. Dans le même temps et en fin d'opération de verrouillage, le palier ouvert 22a s'enclenche autour de l'épaulement 22 et la protubérance 42 s'introduit dans la lumière 13. Cette lumière 13 étant de forme oblongue en arc-de-cercle limite tout en la guidant la rotation angulaire de la pièce cinématique 10 par rapport à la pièce fixe 41. Cette rotation entraîne par exemple l'ouverture ou la fermeture selon le sens de rotation de la commande de volets de chauffage ou de refroidissement du système de chauffage ou de climatisation intégré au tableau de bord d'un véhicule.

Le schéma de la figure 5 illustre le verrouillage de la pièce fixe 41 sur la pièce cinématique 10 de côté.

Le plan de la pièce fixe 41, qui sert de support à la pièce cinématique 10, se trouve en position verrouillée parallèle au plan de la pièce cinématique 10. De cette manière, aucun frottement autre que ceux exercés par les différents moyens de coopération mis en jeu entre eux (la protubérance 42 avec la lumière 13 et le palier ouvert 22a avec l'épaulement 22) n'intervient. Cela permet à la pièce cinématique 10 d'évoluer librement en rotation par rapport à la pièce fixe 41 dans la limite angulaire fixée par la lumière 13.

On présente maintenant, en relation avec la figure 6, une vue en coupe détaillée des moyens de coopération respectifs ensemble.

Afin de maintenir verrouillée la pièce fixe 41 en translation sur la pièce cinématique 10, la protubérance 42 se retrouve, en position verrouillée, accolée au rebord extérieur de la lumière 13. Cela permet en outre le guidage en rotation de la pièce cinématique 10 par rapport à la pièce fixe 41.

La protubérance 42 présente une partie chanfreinée 61, de manière à faciliter son engagement sous le moyen de coopération 12.

L'espace laissé libre dans la lumière 13 permet notamment l'introduction ou un éventuel décliquetage par translation de la protubérance 42 sans trop forcer mécaniquement.

L'épaulement 22 épouse la forme 62 présentée par le palier ouvert, afin d'assurer un meilleur verrouillage de la pièce fixe 41 sur la pièce cinématique 10.

Le mode de réalisation présenté ci-dessus n'a pas pour objet de réduire la portée de l'invention, il pourra donc y être apporté de nombreuses modifications sans sortir du cadre de celle-ci. En particulier, on notera que les moyens de coopération par translation de la pièce fixe et de la pièce cinématique pourront présenter une forme différente de celle représentée.

## Revendications

1. Dispositif de verrouillage d'au moins une pièce fixe (41) avec au moins une pièce cinématique, ledit dispositif comprenant au moins un premier moyen (42) de coopération prévu sur ladite pièce fixe (41) et au moins un second moyen (12) de coopération prévu sur ladite pièce cinématique (10),
caractérisé en ce que ledit second moyen (12) de coopération comprend au moins un axe épaulé (22) conçu pour coopérer avec au moins un palier ouvert (22a) prévu sur ladite pièce fixe (41),
et en ce que, de manière sensiblement simultanée, ledit palier ouvert (22a) reçoit ledit axe épaulé (22) et au moins l'un desdits premier et second moyens (42, 12) de coopération est susceptible de se déformer de façon élastique pour s'encliqueter avec l'autre desdits premier et second moyens (42, 12) de coopération au moyen d'une unique translation parallèle relative entre ladite pièce cinématique (10) et ladite pièce fixe (41).

2. Dispositif selon la revendication 1, caractérisé en ce que lesdits moyens (42, 12) de coopération sont du type mâle-femelle.

3. Dispositif selon la revendication 2, caractérisé en ce que l'un desdits premier et second moyens (42, 12) de coopération comprend au moins une protubérance (42) et en ce que l'autre desdits premier et second moyens (42, 12) de coopération comprend au moins une lumière (13) conçue pour accueillir ladite au moins une protubérance (42).

4. Dispositif selon la revendication 3, caractérisé en ce qu'au moins une desdites protubérance (42) et lumière (13) comprend au moins un rayon et/ou au moins une partie chanfreinée.

5. Dispositif selon l'une quelconque des revendications 3 et 4, caractérisé en ce que ladite au moins une lumière (13) présente une taille suffisante pour permettre un mouvement relatif en translation entre ladite pièce cinématique (10) et ladite pièce fixe (41), lorsque ladite au moins une protubérance (42) coopère avec ladite au moins une lumière (13).

6. Dispositif selon l'une quelconque des revendications 3 à 5, caractérisé en ce que ladite au moins une lumière (13) présente une forme oblongue en arc-de-cercle, ladite pièce cinématique (10) étant susceptible d'observer un mouvement de pivotement d'amplitude limitée par rapport à ladite pièce fixe (41), lorsque lesdits premier et second moyens (42, 12) de coopération sont encliquetés.

7. Dispositif selon l'une quelconque des revendications 1 à 6, caractérisé en ce que ledit au moins un axe épaulé (22) présente une hauteur suffisante pour autoriser un léger jeu entre ladite pièce fixe (41) et ladite pièce cinématique (10).

8. Dispositif selon l'une quelconque des revendications 1 à 7, caractérisé en ce que ladite pièce cinématique (10) coopère avec des moyens permettant de la déplacer par rapport à ladite pièce fixe (41) lorsqu'elle est verrouillée à celle-ci, lesdits moyens de déplacement étant choisis dans le groupe constitué par :
- les leviers ;
- les cames ;
- les pignons.

9. Dispositif selon l'une quelconque des revendications 1 à 8, caractérisé en ce que ladite pièce cinématique (10) et ladite pièce fixe (41) sont intégrées dans un sous-ensemble ou un ensemble mécanique d'un tableau de bord d'un véhicule.
